# FASCICULE DE BREVET EUROPEEN

(11) **EP 2 707 577 B1**
(45) Date de publication et mention de la délivrance du brevet: **21.03.2018**
(21) Numéro de dépôt: 12728659.9
(22) Date de dépôt: 11.05.2012
(51) Int. Cl.: F01D 5/22, F01D 5/28, B29C 70/22, B29C 70/24, B29D 99/00

(54) **ROTOR DE TURBOMACHINE COMPRENANT DES AUBES EN MATERIAU COMPOSITE AVEC TALON RAPPORTE**
TURBOMASCHINENROTOR MIT SCHAUFELN AUS EINEM VERBUNDSTOFF UND MIT ZUSÄTZLICHEM DECKBAND
TURBINE ENGINE ROTOR INCLUDING BLADES MADE OF A COMPOSITE MATERIAL AND HAVING AN ADDED SHROUD

(30) Priorité: 13.05.2011 FR 1154165
(43) Date de publication de la demande: 19.03.2014
(73) Titulaire: SAFRAN AIRCRAFT ENGINES, 75015 Paris (FR)
(72) Inventeur: HERRAIZ, Ivan, F-64000 Pau (FR); ROUSSILLE, Clément, F-33200 Bordeaux (FR); MATEO, Julien, F-33360 Carignan De Bordeaux (FR); ALLARIA, Alain, F-33320 Le Taillan Medoc (FR); SOUPIZON, Jean-Luc, F-77530 Vaux Le Penil (france) (FR)
(74) Mandataire: Desormiere, Pierre-Louis
(86) Numéro de dépôt international: PCT/FR2012/051048
(87) Numéro de publication internationale: WO 2012/156626

(56) Documents cités:
- EP-A1- 0 284 829
- FR-A1- 2 928 963
- FR-A1- 2 943 942
- US-A- 3 065 955

## Description

### Arrière-plan de l'invention

L'invention concerne les rotors de turbomachine équipés d'aubes en matériau composite comportant un renfort fibreux densifié par une matrice.

Le domaine visé est celui des rotors de turbines à gaz pour moteurs aéronautiques ou turbines industrielles.

La réalisation d'aubes en matériau composite pour des rotors de turbomachines a déjà été proposée. On se référera notamment à la demande de brevet international WO 2010/061140 déposée conjointement par Snecma et Snecma Propulsion Solide. Cette demande décrit la fabrication d'une aube de turbomachine en matériau composite comprenant un renfort fibreux densifié par une matrice. De façon plus précise, ce procédé présente la particularité que l'ébauche fibreuse réalisée par tissage multicouche intègre deux textures qui se croisent pour former, après mise en forme, une préforme fibreuse en une seule pièce ayant une première partie formant préforme de pale et pied d'aube et au moins une deuxième partie formant préforme de talon d'aube. Ainsi, après densification de la préforme, il est possible d'obtenir une aube en matériau composite ayant un renfort fibreux constitué par la préforme et densifié par la matrice, et formant une seule pièce avec talon intégré.

Cependant, cette technique de formation de talon d'aube complexifie la fabrication industrielle de l'aube et augmente son coût de fabrication car elle engendre des pertes de matière importantes et demande des manipulations délicates qui ralentissent la vitesse de production. En outre, les jeux de fonctionnement nécessaires entre les talons génèrent des fuites qui diminuent la performance globale de la turbine.

Le document FR 2 943 942 A1 décrit une aube en matériau composite et son procédé de fabrication. Le document US 3 065 955 A décrit une aube à talon rapporte.

### Objet et résumé de l'invention

Il est donc souhaitable de pouvoir disposer de rotors de turbomachine munis d'aubes en matériau composite, notamment mais non nécessairement en matériau composite thermostructural tel qu'en CMC, pour des turbines ou compresseurs de turbomachines, qui sont relativement simples à fabriquer tout en assurant une étanchéité en particulier au niveau des talons d'aube.

A cet effet, il est proposé un rotor de turbomachine selon la revendication 1 comprenant au moins une aube en matériau composite comprenant un renfort fibreux densifié par une matrice, chaque aube comprenant un corps de pale s'étendant entre une extrémité interne comprenant un pied d'aube et une extrémité externe formant le sommet d'aube, caractérisé en ce qu'il comprend au moins un élément de talon d'aube en matériau composite comprenant un renfort fibreux densifié par une matrice, l'élément de talon d'aube comprenant au moins une ouverture dans laquelle est engagée l'extrémité externe d'une aube, la partie de l'extrémité externe de chaque aube s'étendant au-dessus de l'élément de talon d'aube comportant au moins une lumière ou encoche dans laquelle est placée un élément de verrouillage.

Par rapport aux rotors à aubes en matériau composite de l'art antérieur, l'invention prévoit de rapporter un talon d'aube sur le sommet d'une ou plusieurs aubes du rotor. Ce choix de conception permet de simplifier la fabrication à la fois des aubes et des éléments de talon d'aube du rotor et de favoriser l'industrialisation de ces pièces en matériau composite.

En outre, en choisissant de rapporter un élément de talon d'aube plutôt que de le réaliser sur l'aube directement, on dispose d'une plus grande liberté dans la conception de cet élément notamment au niveau de sa géométrie. Ce choix de conception accroit également la précision de fabrication pour une production en série, ce qui permet de réduire les tolérances de fabrication et, par conséquent, les jeux de fonctionnement nécessaires. Il est ainsi possible de concevoir des éléments de talon d'aube aptes à réduire les fuites et à améliorer les performances de la turbine au niveau du profil supérieur de la veine.

Par ailleurs, le coût de réparation est en outre réduit car, en cas d'endommagement d'une aube ou d'un élément de talon d'aube, seule la pièce endommagée doit être remplacée.

Selon un premier aspect du rotor de l'invention, l'extrémité externe de chaque aube présente des dimensions inférieures à la partie sous-jacente du corps de pale de manière à délimiter un épaulement formant une surface d'appui pour l'élément de talon d'aube. On facilite ainsi le positionnement des éléments de talon d'aube sur celles-ci.

Selon un deuxième aspect, chaque élément de talon d'aube comprend un plateau de becquets de talon d'aube et un plateau de léchettes de talon d'aube.

Selon un troisième aspect, chaque élément de talon d'aube présente à chacune de ses extrémités longitudinales un décalage de manière à permettre un chevauchement partiel entre deux éléments de talon d'aube adjacents. Ce chevauchement permet d'augmenter l'étanchéité de la veine entre deux éléments de talon d'aube adjacents qui sont plaqués l'un contre l'autre en fonctionnement sous l'effet des forces centrifuges et la retenue exercée par l'élément de verrouillage tout en respectant le profil de veine. Un dispositif amortisseur peut en outre être disposé au niveau de la partie de chevauchement.

Selon un quatrième aspect, chaque élément de talon d'aube comprend une pluralité d'ouvertures de manière à engager chaque élément de talon d'aube avec les extrémités externes de plusieurs aubes adjacentes. En réunissant plusieurs aubes avec un même élément de talon d'aube, on réduit encore les fuites.

Selon un cinquième aspect, l'extrémité externe de chaque aube s'étendant au-dessus de l'élément de talon d'aube comporte deux lumières ou encoches, chaque élément de verrouillage comportant deux bras engagés respectivement dans lesdites lumières ou encoches.

Selon un sixième aspect, chaque élément de verrouillage comporte à une extrémité un rebord coopérant avec un logement ménagé dans chaque élément de talon d'aube de manière à maintenir en position chaque élément de verrouillage.

Selon un huitième aspect, chaque aube comprend en outre tout ou partie d'une plateforme d'aube avec ou sans becquet et avec ou sans muret anti-basculement.

Selon un neuvième aspect, le renfort fibreux de chaque aube est obtenu par tissage multicouche de fils.

Selon un dixième aspect, chaque aube et chaque élément de talon d'aube est en matériau composite à matrice céramique (CMC) ou à matrice organique (CMO).

La présente invention, vise également un compresseur équipé d'un rotor selon l'invention et une turbomachine équipée d'un tel compresseur.

Selon la présente invention, il est proposé aussi un procédé de fabrication d'un rotor de turbomachine selon la revendication 14 comprenant la réalisation d'au moins une aube comprenant pour chaque aube :
- la réalisation d'une ébauche fibreuse d'aube en une seule pièce,
- la mise en forme de l'ébauche fibreuse pour obtenir une préforme fibreuse d'aube en une seule pièce ayant une première partie formant préforme de pale et pied d'aube,
- la densification de la préforme d'aube par une matrice pour obtenir une aube en matériau composite ayant un renfort fibreux constitué par la préforme et densifié par la matrice, et comprenant un corps de pale s'étendant entre une extrémité interne comprenant un pied d'aube et une extrémité externe formant un sommet d'aube,
caractérisé en ce que ledit procédé comprend en outre :
- la réalisation d'au moins une lumière ou encoche dans l'extrémité externe de chaque aube,
- la réalisation d'au moins une ébauche fibreuse en une seule pièce d'un élément de talon d'aube,
- la mise en forme de l'ébauche fibreuse pour obtenir une préforme fibreuse d'élément de talon d'aube,
- la densification de la préforme d'élément de talon d'aube par une matrice pour obtenir un élément de talon d'aube en matériau composite ayant un renfort fibreux constitué par la préforme et densifié par la matrice,
- la réalisation d'au moins une ouverture dans l'élément de talon d'aube,
- le montage de chaque aube sur un moyeu par engagement du pied de chaque aube dans un logement de forme correspondante aménagé à la périphérie dudit moyeu,
- le montage de chaque élément de talon d'aube sur au moins une aube par engagement de l'extrémité externe de l'aube dans l'ouverture ou encoche de l'élément de talon d'aube,
- la disposition d'un élément de verrouillage dans au moins la lumière de l'extrémité externe de chaque aube.

En fabricant indépendamment l'aube et l'élément de talon d'aube en matériau composite, on simplifie la fabrication industrielle du rotor tout en améliorant l'étanchéité et les performances de la turbine comme expliqué ci-avant.

Selon une particularité du procédé, l'extrémité externe de chaque aube est usinée de manière à délimiter un épaulement formant une surface d'appui pour l'élément de talon d'aube.

Selon une autre particularité, chaque élément de talon d'aube comprend un plateau de becquets de talon d'aube et un plateau de léchettes de talon d'aube.

Selon encore une autre particularité, l'ébauche fibreuse de chaque élément de talon d'aube est réalisée par tissage multicouche entre une pluralité de couche de fils, l'ébauche comprenant des zones de déliaison partielles entre deux séries de couches de fils adjacentes, une des deux séries de couches étant rabattues lors de la mise en forme de l'ébauche de manière à former des léchettes.

### Brève description des dessins

L'invention sera mieux comprise à la description faite ci-après, à titre indicatif mais non limitatif, en référence aux dessins annexés sur lesquels :
- la figure 1 est une vue en perspective d'un rotor de turbomachine conformément à un mode de réalisation de l'invention ;
- la figure 2 est une vue de détail d'une partie du rotor de la figure 1 avant montage des éléments de talon d'aube ;
- la figure 3 est une vue de détail d'une partie du rotor de la figure 1 après montage des éléments de talon d'aube ;
- la figure 4 illustre de façon très schématique la réalisation d'une ébauche fibreuse tissée multicouche destinée à la réalisation d'un élément de talon d'aube tel que celui illustré par les figures 2 et 3 ;
- la figure 5 illustre la réalisation d'une préforme fibreuse pour un élément de talon d'aube tel qu'illustré par les figures 2 et 3, à partir de l'ébauche fibreuse de la figure 4 ;
- la figure 6 illustre de façon très schématique la disposition de deux ensembles de couches de fils dans une ébauche fibreuse tissée multicouche destinée à la réalisation d'une préforme fibreuse pour une aube telle que celle illustrée par les figures 2 et 3 ;
- les figures 7 à 9 illustrent des étapes successives de réalisation d'une préforme fibreuse pour une aube telle qu'illustrée par les figures 2 et 3, à partir de l'ébauche fibreuse de la figure 6 ;
- la figure 10A est une vue partielle en coupe chaîne dans une partie de l'ébauche fibreuse de la figure 6 correspondant à l'emplacement de jonction entre pale et plateforme d'aube ;
- la figure 10B est une vue partielle en coupe trame dans une partie de l'ébauche fibreuse de la figure 6 correspondant à l'emplacement de jonction entre pale et plateforme d'aube ;
- les figures 11 et 12 sont des vues schématiques en perspectives d'une partie de rotor conformément à une variante de réalisation de l'invention ;
- les figures 13 et 14 sont des vues schématiques en perspectives d'une partie de rotor conformément à une autre variante de réalisation de l'invention.

### Description détaillée de modes de réalisation

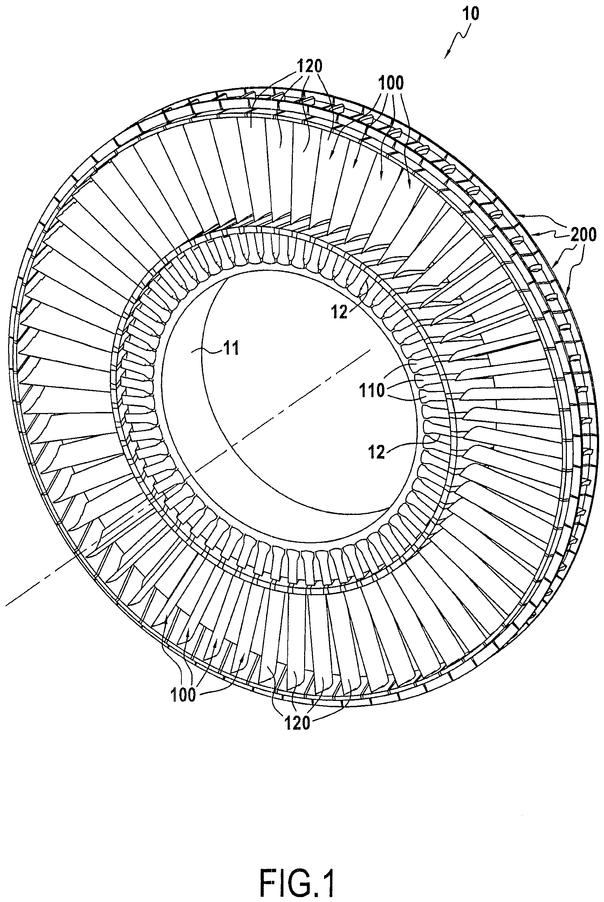

L'invention est applicable à différents types de rotors de turbomachines, notamment des rotors de compresseur et de turbine de différents corps de turbines à gaz, par exemple une roue mobile de turbine basse pression (BP), telle que celle illustrée par la figure 1.

La figure 1 montre un rotor 10 de turbomachine comprenant un moyeu 11 sur lequel est montée une pluralité d'aubes 100, chaque aube 100 comprenant de façon en soi bien connue un pied 110 formé par une partie de plus forte épaisseur, par exemple à section en forme de bulbe, qui est engagée dans un logement correspondant 12 ménagé à la périphérie du moyeu 11 et une pale 120.

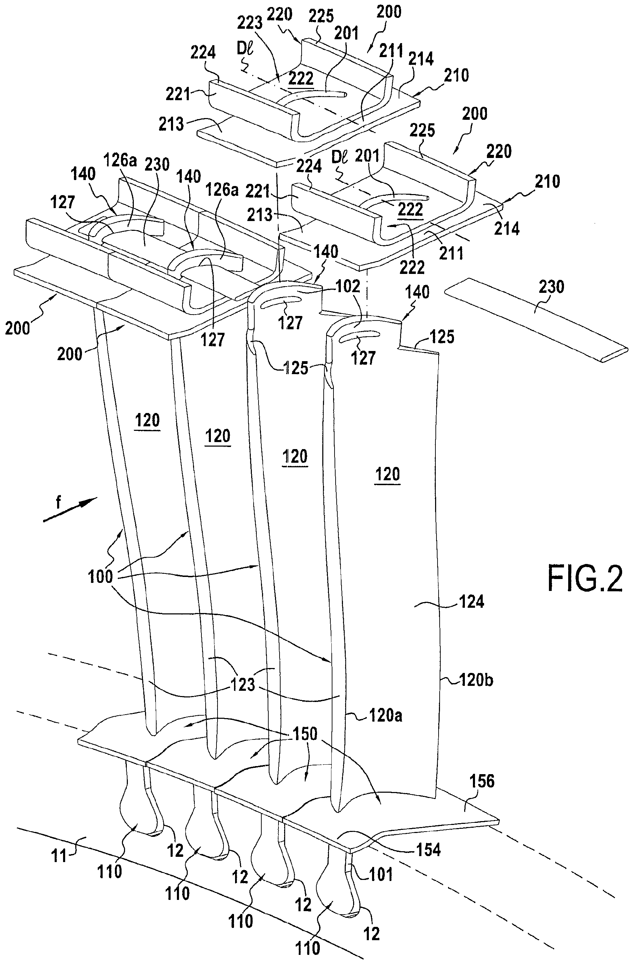

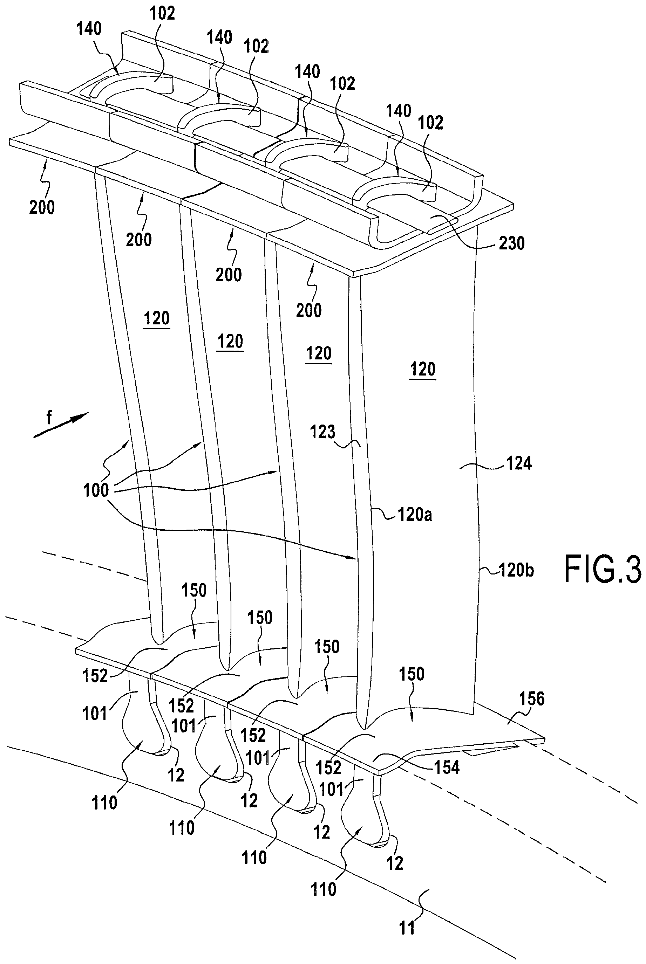

Conformément à l'invention, le rotor comprend plusieurs éléments de talon d'aube 200 montés sur chacune des aubes 100. Plus précisément, comme illustré sur les figures 2 et 3, la pale 120 s'étend en direction longitudinale entre une extrémité interne 101 de l'aube comprenant le pied 110 et son extrémité externe 102 formant le sommet 140 de l'aube 100. La pale présente en section transversale un profil incurvé d'épaisseur variable délimitant deux faces 123 et 124, correspondant respectivement à l'extrados et à l'intrados de la pale 120 et reliant chacune le bord d'attaque 120a et le bord de fuite 120b de cette dernière. Dans l'exemple décrit ici, la pale 120 comprend en outre une plateforme d'aube 150 dont la face externe (ou supérieure) 152 délimite, radialement à l'intérieur, la veine d'écoulement d'un flux gazeux f. Dans ses parties d'extrémité amont et aval dans le sens f d'écoulement du flux gazeux, la plateforme 150 se termine par des becquets de recouvrement 154 et 156.

Chaque élément de talon d'aube 200 comprend ici une ouverture 201 engagée avec l'extrémité externe d'une aube 100. L'ouverture 201 présente une forme et des dimensions adaptées à celle de l'extrémité externe de chaque aube 100. Dans l'exemple décrit ici, l'extrémité externe 102 de chaque aube 100 qui est engagée dans une ouverture 201 de l'élément de talon d'aube 200 est constituée par une portion 126 qui présente des dimensions inférieures à celles du reste du corps de la pale 120 de manière à délimiter un épaulement 125 formant une surface d'appui pour l'élément de talon d'aube 200. Toutefois, l'élément de talon d'aube selon l'invention peut également comporter des ouvertures ayant une forme et des dimensions adaptées au passage d'une extrémité externe d'aube n'ayant pas été réduite par rapport au reste du corps de la pale.

Dans l'exemple décrit ici, l'élément de talon d'aube 200 comprend un plateau de becquets de talon d'aube 210 et un plateau de léchettes de talons d'aube 220 disposées sur la face supérieure 211 du plateau de becquets 210. Dans ses parties amont et aval dans le sens f d'écoulement du flux gazeux, le plateau de becquets de talon d'aube 210 se termine par des becquets de recouvrement 213 et 214. Dans l'exemple illustré, la face inférieure 212 du plateau de becquets de talon d'aube 210 s'étend sensiblement perpendiculairement à la direction longitudinale de l'aube. En variante, selon le profil souhaité de la surface extérieure de la veine d'écoulement de flux gazeux, la face inférieure 212 pourrait être inclinée en formant globalement un angle non nul par rapport à la normale à la direction longitudinale de l'aube ou la face 212 pourrait avoir un profil globalement non rectiligne, par exemple incurvé. La pente de l'épaulement 125 est dans ce cas adaptée à la forme de la face inférieure 212 du plateau 210.

Sur sa face externe (supérieure) 222, le plateau de léchettes de talon d'aube 220 délimite une dépression ou baignoire 223. Le long des bords amont et aval de la baignoire 223, le plateau 220 porte des parties repliées formant des léchettes 224 et 225 à profil en forme de dents dont les extrémités peuvent pénétrer dans une couche de matériau abradable d'un anneau de turbine (non représenté) pour réduire le jeu entre le sommet d'aube et l'anneau de turbine.

Comme illustrée sur la figure 3, la partie de l'extrémité externe 102 de chaque aube 100 qui s'étend au-dessus de l'élément de talon d'aube 200, ici la partie 126a de la portion 126, comporte une lumière 127 dans laquelle est disposée un élément ou clé de verrouillage 230 destiné à maintenir en place l'élément de talon d'aube 200 sur l'extrémité externe 102 de l'aube 100 en particulier vis-à-vis des forces centrifuges. Dans l'exemple décrit ici, l'élément de verrouillage 230 présente une longueur sensiblement équivalente à celle de deux éléments de talon d'aube 200 de manière à être introduit dans les lumières 127 de deux aubes 100 adjacentes et assurer le maintien en place de deux élément de talon 200 adjacents, le rotor comprenant une pluralité d'éléments de verrouillage 230 répartis sur la périphérie externe des aubes formée par la réunion des faces externes 222 des plateaux de léchettes de talon d'aube 220 adjacents. Bien entendu, l'élément de verrouillage peut avoir une longueur différente lui permettant d'être introduit dans un nombre différent de lumière, comme par exemple une seule lumière ou plus de deux lumières à la fois, et d'assurer ainsi le maintien d'un ou plusieurs éléments de talon d'aube en même temps.

Toujours dans l'exemple décrit ici, le plateau de becquets de talon d'aube 210 et le plateau de léchettes de talons d'aube 220 présentent, dans leur direction longitudinale Dₗ, une longueur équivalente tout en étant décalés l'un par rapport à l'autre dans cette même direction. On forme ainsi aux extrémités longitudinales de chaque élément de talon d'aube 200 respectivement deux décalages 211 et 221 qui permettent de réaliser un chevauchement partiel avec les éléments de talon d'aube 200 adjacents et d'améliorer ainsi l'étanchéité de la veine tout en respectant son profil.

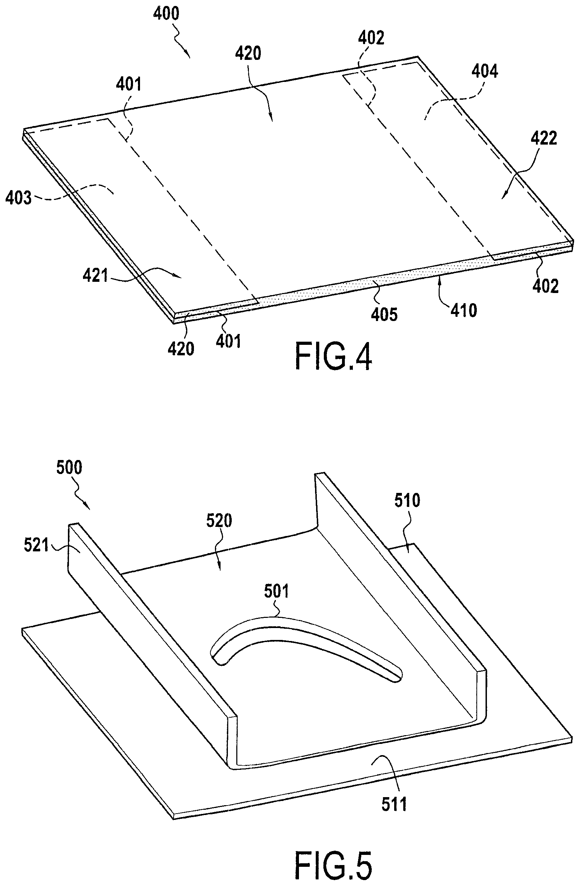

La figure 4 montre très schématiquement une ébauche fibreuse 400 destinée à former le renfort fibreux de l'élément de talon d'aube et à partir de laquelle une préforme fibreuse d'élément de talon d'aube peut être mise en forme afin, après densification par une matrice et usinage, d'obtenir un élément de talon d'aube tel que l'élément 200 illustré par les figures 2 et 3.

Dans l'exemple décrit ici, l'ébauche fibreuse 400 est obtenue, comme illustrée schématiquement sur la figure 4, par tissage multicouche entre une pluralité de couches de fils de chaîne et une pluralité de couches de trame. Le tissage multicouche réalisé peut être notamment un tissage à armure "interlock", c'est-à-dire une armure de tissage dans laquelle chaque couche de fils de trame lie plusieurs couches de fils de chaîne avec tous les fils d'une même colonne de trame ayant le même mouvement dans le plan de l'armure.

L'ébauche 400 comprend une première et une deuxième portions 410 et 420 destinées à former respectivement le plateau de becquets de talon d'aube 210 et le plateau de léchettes de talon d'aube 220. Lors du tissage, une première et une deuxième déliaisons 401 et 402 sont réalisées à l'intérieur de l'ébauche fibreuse entre deux couches successives de fils de chaîne situées à la frontière entre les portions 410 et 420 et sur respectivement deux zones de déliaison 403 et 404. Les portions 410 et 420 sont liées entre elles au niveau d'une zone de liaison 405 située entre les deux zones de déliaison 403 et 404. Les déliaisons 401 et 402 permettent de former respectivement deux parties 421 et 422 qui peuvent être repliées lors de la mise en forme de l'ébauche afin de former au final les léchettes 224 et 225 du plateau de léchettes de talon d'aube 220.

L'ébauche fibreuse destinée à former le renfort fibreux de l'élément de talon d'aube peut être également obtenue par assemblage de deux textures fibreuses correspondant respectivement aux première et deuxième portions 410 et 420 de l'ébauche fibreuse 400 décrite ci-avant. Dans ce cas, les deux textures fibreuses sont liées entre elles, par exemple par couture ou aiguilletage, seulement au niveau de la zone de liaison 405 de manière à former les deux parties 421 et 422 qui peuvent être repliées lors de la mise en forme de l'ébauche afin de former au final les léchettes 224 et 225 du plateau de léchettes de talon d'aube 220. Les deux textures fibreuses correspondant respectivement aux première et deuxième portions 410 et 420 peuvent être notamment chacune obtenue à partir d'une couche ou d'un empilement de plusieurs couches de :
- tissu unidimensionnel (UD),
- tissu bidimensionnel (2D),
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

Dans le cas d'un empilement de plusieurs couches, celles-ci sont liées entre elles par exemple par couture, par implantation de fils ou d'éléments rigides ou par aiguilletage.

La figure 5 montre très schématiquement une préforme fibreuse 500 de l'élément de talon d'aube à fabriquer ensuite obtenue par moulage avec déformation de la portion 410 pour reproduire des formes semblables à celles du plateau de becquets de talon d'aube et pliage des parties 421 et 422 de la portion 420 pour reproduire des formes semblables à celles des léchettes du plateau de léchettes de talon d'aube. On obtient ainsi une préforme 500 avec une partie 510 de préforme de plateau de becquets de talon d'aube et une partie 520 plateau de léchettes de talon d'aube. Afin de former un élément de talon d'aube correspondant à l'élément de talon d'aube 200 illustrée par les figures 2 et 3, des décalages 511 et 521 sont ménagés respectivement aux extrémités longitudinales de la préforme 500. Lorsque l'ébauche fibreuse destinée à former l'élément de talon d'aube est obtenue par tissage multicouches, les décalages sont réalisés par usinage après densification de la préforme. Lorsque l'ébauche est réalisée par assemblage de deux textures fibreuses correspondant respectivement au plateau de becquets et au plateau de léchettes de talon d'aube, les textures peuvent être assemblées initialement avec un décalage correspondant.

Après densification, la préforme 500 est usinée afin de former une ouverture 501 ayant une forme et des dimensions équivalentes à celles de l'ouverture 201 des éléments de talon d'aube à fabriquer. On obtient ainsi une préforme fibreuse 500 permettant d'obtenir, après densification par une matrice et usinage, un élément de talon d'aube en matériau composite telle que l'élément de talon d'aube 200 illustrée par les figures 2 et 3.

Afin d'éviter l'introduction de coefficients de dilatation thermique différentiels entre les aubes et les éléments de talon d'aube, ces derniers sont de préférence réalisés avec des fibres et une matrice de même nature.

Par ailleurs, les éléments de verrouillage 230 peuvent être réalisés en différents matériau comme par exemple un matériau métallique. Toutefois, afin d'éviter l'introduction de coefficients de dilatation thermique différentiel et de contraintes mécaniques entre les aubes, les éléments de talon d'aube et les éléments de verrouillage, les éléments de verrouillage sont de préférence réalisés en matériau composite ayant des fibres et une matrice de même nature que celles utilisées pour réaliser les aubes et les éléments de talon d'aube.

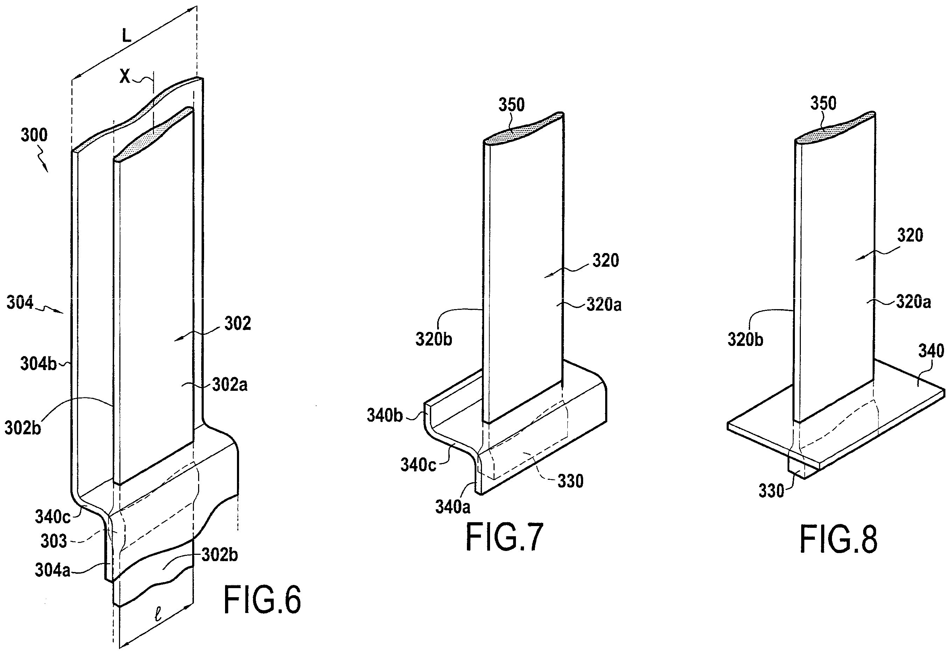

La figure 6 montre très schématiquement une ébauche fibreuse 300 à partir de laquelle une préforme fibreuse d'aube peut être mise en forme afin, après densification par une matrice et usinage éventuel, d'obtenir une aube en matériau composite à plateforme et plateau de becquets de talon intégrés telle que l'aube 100 illustrée par les figures 2 et 3.

L'ébauche 300 comprend deux bandes fibreuses 302, 304 obtenues par tissage tridimensionnel ou tissage multicouches, seules les enveloppes de ces deux parties étant représentées sur la figure 6. La bande fibreuse 302 est destinée, après mise en forme, à constituer une partie de préforme fibreuse d'aube correspondant à une préforme de pale et pied d'aube, cette partie présentant une face 302a destinée à former le côté intrados de la pale et une face 302b destinée à former le côté extrados de la pale. La bande fibreuse 304 est destinée, après mise en forme, à constituer la partie de préforme fibreuse d'aube correspondant à une préforme de plateforme de talon d'aube.

Les deux bandes fibreuses 302, 304 s'étendent de façon générale dans une direction X correspondant à la direction longitudinale de l'aube à réaliser. La bande fibreuse 302 présente, dans sa partie destinée à former une préforme de pale, une épaisseur variable déterminée en fonction de l'épaisseur de profil de la pale de l'aube à réaliser. Dans sa partie destinée à former une préforme de pied, la bande fibreuse 302 présente une surépaisseur 303 déterminée en fonction de l'épaisseur du pied de l'aube à réaliser.

La bande fibreuse 302 a une largeur l choisie en fonction de la longueur du profil développé (à plat) de la pale et du pied de l'aube à réaliser tandis que la bande fibreuse 304 a une largeur L supérieure à l choisie en fonction des longueurs développées de la plateforme à réaliser.

La bande fibreuse 304 est d'épaisseur sensiblement constante déterminée en fonction des épaisseurs de plateforme d'aube à réaliser. La bande 304 comprend une première partie 304a qui s'étend le long et au voisinage d'une première face 302a (intrados) de la bande 302 et une deuxième partie 304b qui s'étend le long et au voisinage de la deuxième face 302b (extrados) de la bande 302.

Les parties 304a et 304b se raccordent par une partie de raccordement 340c qui s'étend transversalement par rapport à la bande 302 à un emplacement correspondant à celui de la plateforme de l'aube à réaliser. La partie de raccordement 340c traverse la bande sensiblement perpendiculairement à la direction longitudinale de l'ébauche fibreuse. Selon la géométrie souhaitée au niveau de la plateforme d'aube, la partie de raccordement 340c pourra traverser la bande 302 en formant un angle non nul par rapport à la normale à la direction longitudinale X de l'ébauche. En outre, le profil de la partie de raccordement 340c pourra être curviligne au lieu d'être rectiligne comme dans l'exemple illustré.

Comme décrit plus en détail plus loin, les bandes 302 et 304 sont tissées simultanément par tissage multicouche, sans liaison entre la bande 302 et les parties 304a et 304b de la bande 304 et en tissant une pluralité d'ébauches 300 successives de façon continue dans la direction X.

Les figures 7 à 9 montrent très schématiquement comment une préforme fibreuse ayant une forme proche de celle de l'aube à fabriquer peut être obtenue à partir de l'ébauche fibreuse 300.

La bande fibreuse 302 est coupée à une extrémité dans la surépaisseur 303 et à une autre extrémité pour avoir une bande 320 de longueur correspondant à la dimension longitudinale de l'aube à fabriquer avec une partie renflée 330 formée par une partie de la surépaisseur 303 et située à un emplacement correspondant à la position du pied de l'aube à fabriquer et avec une extrémité opposée 350 correspondant au sommet d'aube à fabriquer. La bande 320 présentant une face 320a destinée à former le côté intrados de la pale et une face 320b destinée à former le côté extrados de la pale.

En outre, des découpes sont pratiquées aux extrémités de la partie 304a et dans la partie 304b de celle-ci pour laisser subsister des tronçons 340a et 340b de part et d'autre de la partie de raccordement 340c comme le montre la figure 7. Les longueurs des tronçons 340a et 340b sont déterminées en fonction des longueurs de la plateforme dans l'aube à fabriquer.

Du fait de la déliaison entre la bande 320 de l'ébauche fibreuse, d'une part, et les parties 304a et 304b, d'autre part, les tronçons 340a et 340b peuvent être rabattus perpendiculairement à la bande 302 sans couper de fils pour former un plateau 340 comme montré par la figure 8.

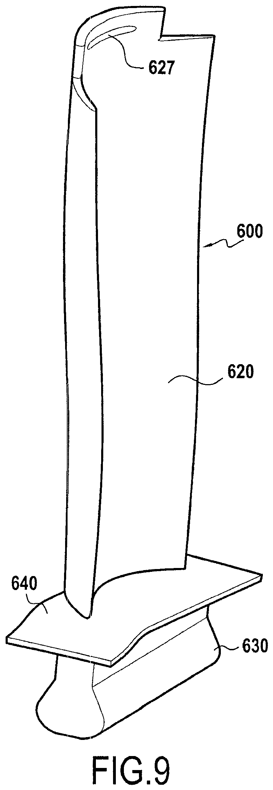

Une préforme fibreuse 600 de l'aube à fabriquer est ensuite obtenue par moulage avec déformation de la bande 320 pour reproduire le profil incurvé de la pale de l'aube et déformation du plateau 340 pour reproduire une forme semblable à celle de la plateforme de l'aube, comme le montre la figure 9. Après densification, la préforme 600 est usinée afin de former une lumière 627 ayant une forme et des dimensions équivalentes à celles de la lumière 127 des aubes à fabriquer. On obtient ainsi une préforme 600 avec une partie 620 de préforme de pale, une partie 630 de préforme de pied (avec préforme d'échasse) et une partie 640 de préforme de plateforme.

Lorsque les ébauches fibreuses de l'élément de talon d'aube et de l'aube sont réalisées par tissage, le tissage est réalisé avec des fils de chaîne s'étendant dans la direction longitudinale X de l'ébauche, étant noté qu'un tissage avec des fils de trame dans cette direction est également possible.

Dans un exemple de réalisation, les fils utilisés peuvent être des fils de carbure de silicium (SiC) fournis sous la dénomination "Nicalon" par la société japonaise Nippon Carbon et ayant un titre (nombre de filaments) de 0,5K (500 filaments).

Bien entendu, selon les titres de fils disponibles, différentes combinaisons de nombres de couches de fils et de variations de contexture et de titre pourront être adoptées pour le profil à obtenir.

Pour le tissage de l'ébauche fibreuse 300 hors de la surépaisseur 303, ainsi que l'ébauche fibreuse 400, le tissage utilisé peut être par exemple un tissage multicouche, réalisé avec une armure de type satin, ou multi-satin. D'autres types de tissage multicouche pourront être utilisés, par exemple un tissage multicouche à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Différents modes de tissage multicouche sont notamment décrits dans le document WO 2006/136755.

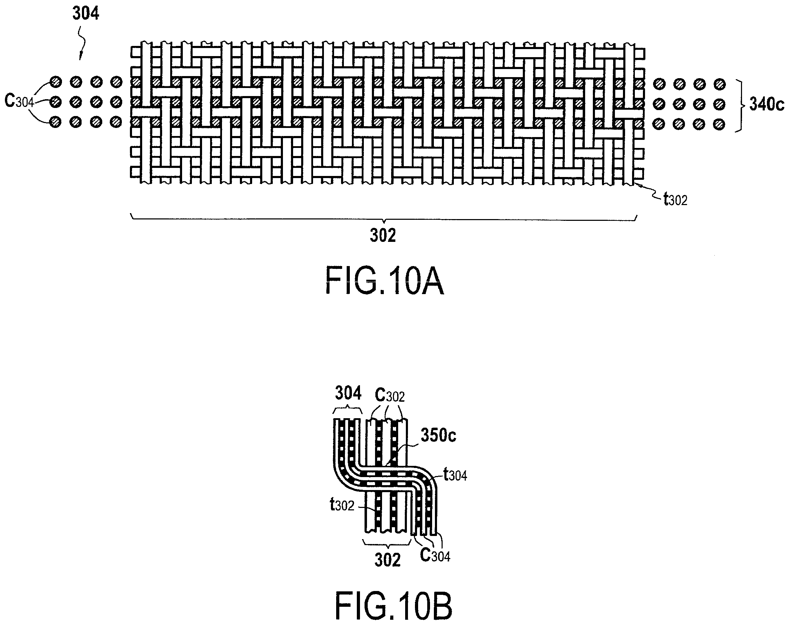

La figure 10A est une vue en coupe chaîne au niveau de la traversée de la bande 302 par la partie de raccordement 340c de la bande 304 de l'ébauche fibreuse de la figure 6, les fils de chaîne de la bande 304 dans cette partie de raccordement étant vus en coupe. Chaque couche de fils de chaîne C₃₀₄ s'étend, dans cette partie de raccordement 340c, dans une direction perpendiculaire à la direction trame de la bande 302. Le passage de la bande 304 d'un côté à l'autre de la bande 302 est réalisé, lors du tissage, en faisant traverser l'ensemble des fils de chaîne et de trame de la bande 302 par une partie des fils des couches de fils de chaîne C₃₀₄ de la bande 304, individuellement. Dans cette partie, les couches de fils de chaîne C₃₀₄ de la bande 304 pénètre entre des fils de trame t₃₀₂ de la bande 302 suivant un profil rectiligne tel que représenté sur la figure 10A. Bien entendu, suivant la forme de la plateforme d'aube désirée, les couches de fils de chaîne C₃₀₄ de la bande 304 peuvent entrer et sortir de la bande 302 avec des profils de formes différentes comme des profils ondulés ou incurvés par exemple.

La figure 10B est une vue en coupe trame des fils de trame t₃₀₂ et t₃₀₄ respectivement des bandes 302 et 304 au niveau de la traversée de la bande 302 par la partie de raccordement 340c de la bande 304 de l'ébauche fibreuse de la figure 3. Dans l'exemple illustré, comme déjà indiqué, la partie de raccordement 340c s'étend perpendiculairement à la direction des couches de fils de chaîne C₃₀₂ de la bande 302. Toutefois, on pourra avoir une partie de raccordement 340c qui s'étend en faisant un angle non nul par rapport à la normale à la direction chaîne, selon l'orientation désirée de la plateforme de talon d'aube.

La surépaisseur 303 de l'ébauche fibreuse 300 de la figure 6 peut être obtenue en utilisant des fils de trame de plus gros titre et des couches supplémentaires de fils de trame. Selon une variante de réalisation, la surépaisseur 303 peut être obtenue en introduisant un insert lors du tissage de la bande 302.

L'ébauche fibreuse destinée à former le renfort fibreux de l'aube peut être également obtenue à d'un empilement de plusieurs couches de :
- tissu unidimensionnel (UD),
- tissu bidimensionnel (2D),
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

Les couches sont liées entre elles par exemple par couture, par implantation de fils ou d'éléments rigides ou par aiguilletage.

On décrit maintenant des étapes successives qui peuvent être mise en oeuvre pour réaliser la mise en forme de l'ébauche fibreuse d'un élément de talon d'aube ou d'une aube de l'invention et la densification de cette préforme.

Comme décrit ci-avant, une ébauche fibreuse destinée à former le renfort fibreux d'un élément de talon d'aube ou d'aube est tissée par tissage multicouche, ou par empilement de structures fibreuses. Pour des aubes de turbomachine destinées à une utilisation à température élevée et notamment en environnement corrosif (notamment humidité), on utilise pour le tissage des fils formés de fibres en céramique, notamment des fibres de carbure de silicium (SiC). Pour des températures moins élevées, des fibres de carbone peuvent être également utilisées.

La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou encore suivant un enchaînement de ces deux procédés.

Le procédé par voie liquide consiste à imprégner la préforme par une composition liquide contenant un précurseur du matériau de la matrice. Le précurseur se présente habituellement sous forme d'un polymère, tel qu'une résine, éventuellement dilué dans un solvant. La préforme est placée dans un moule pouvant être fermé de manière étanche avec un logement ayant la forme de la pièce finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La densification de la préforme fibreuse peut-être également réalisée, de façon connue, par voie gazeuse par infiltration chimique en phase vapeur de la matrice (CVI). La préforme fibreuse correspondant à la structure à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

La matrice peut être notamment obtenue à partir de résines époxydes, telle que, par exemple, la résine époxyde à hautes performances, ou de précurseurs liquides de matrices carbone ou céramique.

Dans l'exemple décrit ici, l'ébauche fibreuse est imprégnée par une composition de consolidation, typiquement une résine éventuellement diluée dans un solvant. On peut utiliser une résine précurseur de carbone, par exemple une résine phénoliques ou furanique, ou une résine précurseur de céramique, par exemple une résine polysilazane ou polysiloxane précurseur de SiC.

Après séchage par élimination du solvant éventuel de la résine, une pré-réticulation de la résine peut être effectuée. La pré-réticulation, ou réticulation incomplète permet d'accroître la raideur, donc la tenue, tout en préservant la capacité de déformation nécessaire pour la réalisation de préformes d'élément: de talon d'aube ou d'aubes.

L'ébauche fibreuse, en particulier celle destinée à former l'aube est découpée, comme illustré par la figure 7.

L'ébauche est ensuite mise en forme (comme illustré par la figure 9) et placée dans un moule par exemple en graphite pour conformation des plateaux de becquets et de léchettes de talon d'aube, dans le cas de l'élément de talon d'aube, et de de la partie de préforme de pale et pied d'aube dans le cas de l'aube.

Ensuite, la réticulation de la résine est achevée et la résine réticulée est pyrolysée. La réticulation et la pyrolyse peuvent être enchaînées par élévation progressive de la température dans le moule.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Une densification par une matrice de la préforme consolidée est ensuite réalisée. Pour une aube de turbomachine destinée à une utilisation à température élevée, et notamment en milieu corrosif, la matrice est en céramique, par exemple en SiC. On peut réaliser la densification par CVI, auquel cas la formation de la deuxième couche d'interphase et la densification par la matrice peuvent être enchaînées dans un même four.

La densification peut être réalisée en deux étapes successives séparées par une étape d'usinage de l'élément de talon d'aube ou de l'aube aux dimensions désirées.

On notera qu'un pré-usinage, notamment pour commencer à former la ou les ouvertures de l'élément de talon d'aube et la ou les lumières ou encoches sur l'extrémité externe de l'aube, peut être réalisé après réticulation et avant pyrolyse de la résine.

Selon une variante de mise en oeuvre, la préforme peut être consolidée par densification partielle en étant maintenue dans le conformateur, la consolidation étant réalisée par formation de dépôt céramique sur les fibres par CVI.

Le conformateur est de préférence en graphite et présente des trous facilitant le passage des phases gazeuses réactionnelles donnant le dépôt d'interphase et le dépôt céramique par CVI.

Lorsque la consolidation est suffisante pour que la préforme puisse être manipulée tout en conservant sa forme sans assistance d'outillage de maintien, la préforme consolidée est extraite du conformateur et la densification par une matrice céramique par CVI est réalisée. La densification peut être réalisée en deux étapes successives séparées par une étape de pré-usinage de l'élément de talon d'aube ou de l'aube aux dimensions désirées, notamment pour commencer à former la ou les ouvertures de l'élément de talon d'aube et la ou les lumières ou encoches sur l'extrémité externe de l'aube, une étape d'usinage final de ces éléments étant réalisée après la deuxième étape de densification.

Dans ce qui précède, on a envisagé la réalisation d'un profil de pale à épaisseur variable par l'utilisation de fils de titre et/ou contexture variables. Il est possible, en variante, de réaliser la partie d'ébauche fibreuse correspondant à la partie de préforme de pale avec un certain nombre de couches de fils de même titre et avec contexture fixe, la variation d'épaisseur du profil étant réalisée lors de l'usinage après première étape de densification ou lors d'un pré-usinage de la préforme d'aube consolidée.

Par ailleurs, selon les conditions d'utilisation envisagées, les fibres du renfort fibreux de l'élément de talon d'aube et de l'aube peuvent être en un matériau autre qu'une céramique, par exemple en carbone, et la matrice peut être en un matériau autre qu'une céramique, par exemple en carbone ou en une résine. L'élément de talon d'aube et l'aube selon l'invention peuvent être notamment réalisées en matériau composite à matrice céramique (CMC) qui est un matériau formé d'un renfort en fibres de carbone ou céramique densifié par une matrice au moins partiellement céramique tel qu'un matériau carbone-carbone/carbure de silicium (C-C/SiC), carbone-carbure de silicium (C/SiC), carbure de silicium-carbure de silicium (SiC/SiC), ou en matériau composite carbone-carbone (C/C) qui, de façon connue, est un matériau formé d'un renfort en fibres de carbone densifié par une matrice en carbone.

L'invention est bien entendu applicable aussi à la fabrication d'élément de talon d'aube et d'aubes en matériau composite à matrice organique (CMO) telle que celle obtenue, par exemple, à partir d'une résine époxyde à hautes performances.

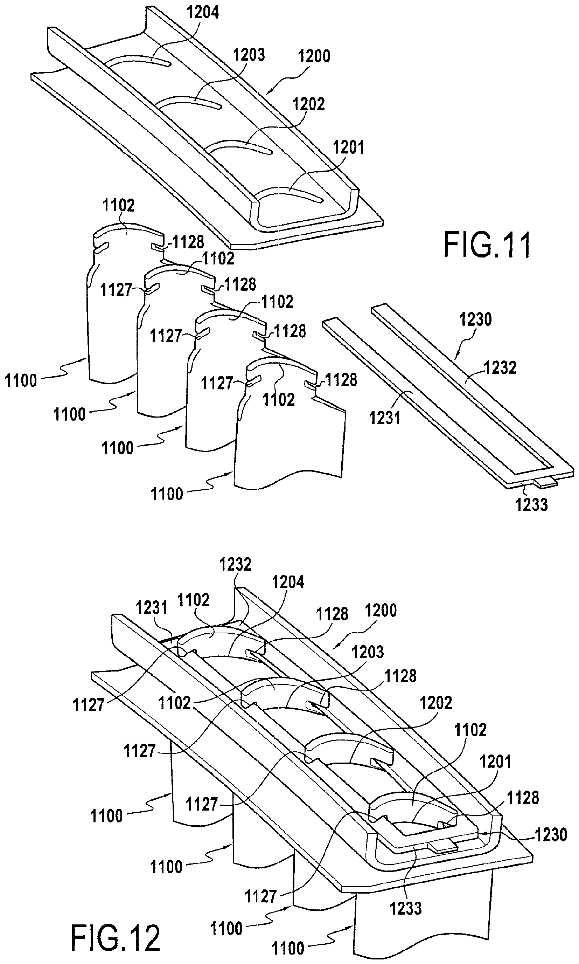

Les figures 11 et 12 montrent une variante de réalisation qui diffère de celle décrite dans les figures 2 et 3 en ce que l'extrémité externe 1102 de chaque aube 1100 comporte, à la place d'une lumière, deux encoches 1127 et 1128 dans lesquelles sont engagées des bras 1231 et 1232 d'un élément de verrouillage 1230 de manière à maintenir en position un élément de talon d'aube 1200 présentant des ouvertures, ici quatre ouvertures 1201 à 1204, dans lesquelles sont engagées les extrémités externes 1102 de quatre aubes 1100. Chaque élément de verrouillage 1230 comprend en outre un élément de butée 1233 destiné à coopérer avec l'extrémité libre des bras 1231 et 1232 de l'élément de verrouillage adjacent permettant, une fois tous les éléments de verrouillage montés, de bloquer ces derniers en position.

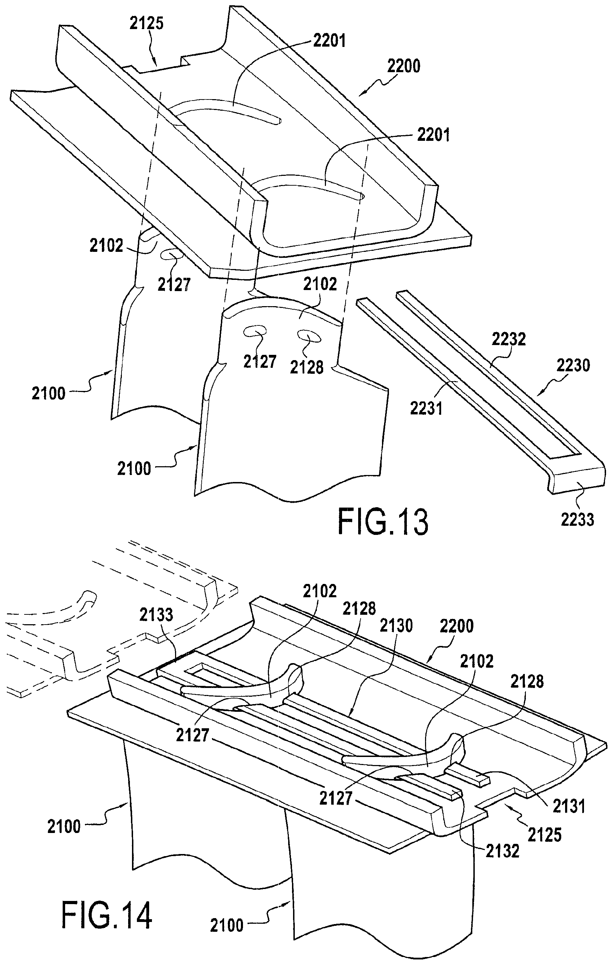

Les figures 13 et 14 montrent une variante de réalisation qui diffère de celle décrite dans les figures 2 et 3 en ce que l'extrémité externe 2102 de chaque aube 2100 comporte deux lumières 2127 et 2128 dans lesquelles sont engagées des bras 2231 et 2232 d'un élément de verrouillage 2230 de manière à maintenir en position un élément de talon d'aube 2200 présentant ici deux ouvertures 2201 et 2202 dans lesquelles sont engagées les extrémités externes 2102 de deux aubes 2100 adjacentes. Chaque élément de verrouillage 2230 comprend en outre un rebord 2233 destiné à coopérer avec un logement 2125 ménagé à une extrémité de chaque élément de talon d'aube permettant, une fois l'élément de ton d'aube adjacent monté comme illustré sur la figure 14, de bloquer l'élément de verrouillage en position. Le logement 2125 est de préférence réalisé uniquement dans le plateau de léchettes de talon d'aube 1220, ce qui permet d'éviter au rebord 2233 de pénétrer dans la veine d'écoulement. On ne perturbe pas ainsi l'écoulement du flux tout en conservant un niveau élevé d'étanchéité.

Par ailleurs, dans les aubes décrites ci-avant l'ébauche fibreuse correspond à une structure fibreuse tissée en une seule pièce qui intègre, en outre d'une première partie destinée à former la pale et le pied de l'aube, une deuxième partie destinée à former une plateforme d'aube imbriquée au moins partiellement avec la première partie (traversée d'au moins une partie de la première partie par des fils de la deuxième partie).

Toutefois, l'aube selon l'invention n'est pas limitée à une telle structure d'aube.

D'une manière générale, l'aube selon l'invention couvre tout type d'aube ayant une première partie constitutive de pale et pied d'aube et une deuxième partie réalisée indépendamment de la première partie et formant un élément de talon d'aube comme décrit ci-avant et rapportée sur la première partie, l'aube pouvant comprendre en outre au moins :
- une troisième partie formant tout ou partie d'une plateforme d'aube avec ou sans becquet et avec ou sans muret anti-basculement,
   les parties de renfort fibreux correspondant à la première et à la troisième partie de l'aube sont au moins en partie mutuellement imbriquées, avec des fils de la troisième partie de renfort fibreux pénétrant dans la première partie de renfort fibreux tel que décrit dans les demandes de brevet français N°1055160 et N°1055161,
- une troisième partie formant tout ou partie d'une plateforme d'aube avec ou sans becquet et avec ou sans muret anti-basculement,
   l'ébauche fibreuse correspondant à la troisième partie étant rapportée et fixée, par exemple par couture, sur l'ébauche fibreuse correspondant à la première partie constitutive de pale de l'aube,
- un élément de plateforme d'aube avec ou sans becquets et avec sous muret anti-basculement, l'élément de plateforme étant fabriqué indépendamment des première et deuxième parties et étant rapporté ensuite sur la pale de l'aube tel que décrit dans le demande de brevet internationale WO 2010/116066,

L'invention s'applique également à des structures dites bi-aubes qui comprennent deux pales liées entre elles, par exemple au niveau d'une plateforme commune.

## Revendications

1. Rotor de turbomachine (10) comprenant au moins une aube (100) en matériau composite comprenant un renfort fibreux densifié par une matrice, chaque aube (100) comprenant un corps de pale (120) s'étendant entre une extrémité interne (101) comprenant un pied d'aube (110) et une extrémité externe (102) formant le sommet (140) de l'aube (100),
**caractérisé en ce qu'**il comprend au moins un élément de talon d'aube (200) en matériau composite comprenant un renfort fibreux densifié par une matrice, l'élément de talon d'aube comprenant au moins une ouverture (201) dans laquelle est engagée l'extrémité externe (102) d'une aube (100), la partie (126a) de l'extrémité externe (102) de chaque aube (100) s'étendant au-dessus de l'élément de talon d'aube (200) comportant au moins une lumière ou encoche (127) dans laquelle est placée un élément de verrouillage (230).

2. Rotor selon la revendication 1, **caractérisé en ce que** l'extrémité externe (102) de chaque aube (100) présente des dimensions inférieures à la partie sous-jacente du corps de pale (120) de manière à délimiter un épaulement (125) formant une surface d'appui pour l'élément de talon d'aube (200).

3. Rotor selon la revendication 1 ou 2, **caractérisé en ce que** chaque élément de talon d'aube (200) comprend un plateau de becquets de talon d'aube (210) et un plateau de léchettes de talon d'aube (220).

4. Rotor selon la revendication 3, **caractérisé en ce que** chaque élément de talon d'aube (200) présente à chacune de ses extrémités longitudinales un décalage (211 ; 213) de manière à permettre un chevauchement partiel entre deux éléments de talon d'aube adjacents.

5. Rotor selon l'une quelconque des revendications 1 à 4, **caractérisé en ce que** chaque élément de talon d'aube comprend une pluralité d'ouvertures (1201-1204 ; 2201, 2202) de manière à engager chaque élément de talon d'aube (1200 ; 2200) avec les extrémités externes (1102 ; 2102) de plusieurs aubes adjacentes (1100 ; 2100).

6. Rotor selon l'une quelconque des revendications 1 à 5, **caractérisé en ce que** l'extrémité externe (2102) de chaque aube (2100) s'étendant au-dessus de l'élément de talon d'aube (2200) comporte deux lumières ou encoches (2127, 2128) et **en ce que** chaque élément de verrouillage (2230) comporte deux bras (2231, 2232) engagés respectivement dans lesdites lumières ou encoches.

7. Rotor selon l'une quelconque des revendications 1 à 6, **caractérisé en ce que** chaque élément de verrouillage (2230) comporte à une extrémité un rebord (2233) coopérant avec un logement (2125) ménagé dans chaque élément de talon d'aube de manière à maintenir en position chaque élément de verrouillage.

8. Rotor selon l'une quelconque des revendications 1 à 7, **caractérisé en ce que** chaque aube comprend en outre tout ou partie d'une plateforme d'aube (150) avec ou sans becquet et avec ou sans muret anti-basculement.

9. Rotor selon l'une quelconque des revendications 1 à 8, **caractérisé en ce que** le renfort fibreux de chaque aube est obtenu par tissage multicouche de fils.

10. Rotor selon l'une quelconque des revendications 1 à 9, **caractérisé en ce que** chaque aube et chaque élément de talon d'aube est en matériau composite à matrice céramique (CMC).

11. Rotor selon l'une quelconque des revendications 1 à 9, **caractérisé en ce que** chaque aube et chaque élément de talon d'aube est en matériau composite à matrice organique (CMO).

12. Compresseur équipé d'un rotor selon l'une quelconque des revendications 1 à 11.

13. Turbomachine équipée d'un compresseur selon la revendication 12.

14. Procédé de fabrication d'un rotor (10) de turbomachine comprenant la réalisation d'au moins une aube (100) comprenant pour chaque aube :
- la réalisation d'une ébauche fibreuse d'aube (300) en une seule pièce,
- la mise en forme de l'ébauche fibreuse pour obtenir une préforme fibreuse d'aube (600) en une seule pièce ayant une première partie formant préforme de pale (620) et pied d'aube (630),
- la densification de la préforme d'aube (600) par une matrice pour obtenir une aube (100) en matériau composite ayant un renfort fibreux constitué par la préforme et densifié par la matrice, et comprenant un corps de pale (120) s'étendant entre une extrémité interne (101) comprenant un pied d'aube (110) et une extrémité externe (102) formant un sommet d'aube (140),
**caractérisé en ce que** ledit procédé comprend en outre :
- la réalisation d'au moins une lumière ou encoche (127) dans l'extrémité externe (102) de chaque aube (100),
- la réalisation d'au moins une ébauche fibreuse (400) en une seule pièce d'un élément de talon d'aube,
- la mise en forme de l'ébauche fibreuse pour obtenir une préforme fibreuse (500) d'élément de talon d'aube,
- la densification de la préforme d'élément de talon d'aube par une matrice pour obtenir un élément de talon d'aube (200) en matériau composite ayant un renfort fibreux constitué par la préforme et densifié par la matrice,
- la réalisation d'au moins une ouverture (201) dans l'élément de talon d'aube,
- le montage de chaque aube sur un moyeu (11) par engagement du pied (110) de chaque aube (100) dans un logement (12) de forme correspondante aménagé à la périphérie dudit moyeu,
- le montage de chaque élément de talon d'aube (200) sur au moins une aube (100) par engagement de l'extrémité externe (102) de l'aube dans l'ouverture ou encoche (201) de l'élément de talon d'aube (200),
- la disposition d'un élément de verrouillage (230) dans au moins la lumière (127) de l'extrémité externe (102) de chaque aube (100).

15. Procédé selon la revendication 14, **caractérisé en ce que** l'extrémité externe (102) de chaque aube (100) est usinée de manière à délimiter un épaulement (125) formant une surface d'appui pour l'élément de talon d'aube (200).

16. Procédé selon la revendication 14 ou 15, **caractérisé en ce que** chaque élément de talon d'aube (200) comprend un plateau de becquets de talon d'aube (210) et un plateau de léchettes de talon d'aube (220).

17. Procédé selon la revendication 16, **caractérisé en ce que** l'ébauche fibreuse de chaque élément de talon d'aube (400) est réalisée par tissage multicouche entre une pluralité de couches de fils et **en ce qu'**elle comprend des zones de déliaison partielles (401, 402) entre deux séries de couches de fils adjacentes, une des deux séries de couches étant rabattues lors de la mise en forme de l'ébauche de manière à former des léchettes.

## Patentansprüche

1. Rotor (10) einer Turbomaschine mit mindestens einer Schaufel (100) aus einem Verbundwerkstoff mit einer matrixverdichteten Faserverstärkung, wobei jede Schaufel (100) einen Blattkörper (120) aufweist, der sich zwischen einem inneren Ende (101) mit einem Schaufelfuß (110) und einem äußeren Ende (102) erstreckt, das die Spitze (140) der Schaufel (100) bildet,
**dadurch gekennzeichnet, dass** er mindestens ein Schaufelabdeckelement (200) aus Verbundwerkstoff mit einer matrixverdichteten Faserverstärkung umfasst, wobei das Schaufelabdeckelement mindestens eine Öffnung (201) umfasst, in die das äußere Ende (102) einer Schaufel (100) eingreift, wobei der Abschnitt (126a) des äußeren Endes (102) jeder Schaufel (100), der sich oberhalb des Schaufelabdeckelements (200) erstreckt, mindestens eine Aussparung oder Kerbe (127) aufweist, in der ein Verriegelungselement (230) angeordnet ist.

2. Rotor gemäß Anspruch 1, **dadurch gekennzeichnet, dass** das äußere Ende (102) jeder Schaufel (100) Abmessungen aufweist, die kleiner sind als der darunter liegende Teil des Blattkörpers (120), sodass ein Absatz (125) begrenzt wird, der eine Auflagefläche für das Schaufelabdeckelement (200) bildet.

3. Rotor gemäß Anspruch 1 oder 2, **dadurch gekennzeichnet, dass** jedes Schaufelabdeckelement (200) eine Spoilerplatte der Schaufelabdeckung (210) und eine Zungenplatte der Schaufelabdeckung (220) umfasst.

4. Rotor gemäß Anspruch 3, **dadurch gekennzeichnet, dass** jedes Schaufelabdeckelement (200) an jedem seiner Längsenden einen Versatz (211; 213) aufweist, sodass eine partielle Überlappung zwischen zwei benachbarten Schaufelabdeckelementen ermöglicht wird.

5. Rotor gemäß einem der Ansprüche 1 bis 4, **dadurch gekennzeichnet, dass** jedes Schaufelabdeckelement eine Vielzahl von Öffnungen (1201-1204; 2201, 2202) aufweist, sodass jedes Schaufelabdeckelement (1200; 2200) mit den äußeren Enden (1102; 2102) einer Vielzahl benachbarter Schaufeln (1100; 2100) in Eingriff gebracht wird.

6. Rotor gemäß einem der Ansprüche 1 bis 5, **dadurch gekennzeichnet, dass** das äußere Ende (2102) jeder Schaufel (2100), das sich oberhalb des Schaufelabdeckelements (2200) erstreckt, zwei Aussparungen oder Kerben (2127, 2128) aufweist und dass jedes Verriegelungselement (2230) zwei Arme (2231, 2232) aufweist, die in die Aussparungen bzw. Kerben eingreifen.

7. Rotor gemäß einem der Ansprüche 1 bis 6, **dadurch gekennzeichnet, dass** jedes Verriegelungselement (2230) an einem Ende einen Flansch (2233) aufweist, der mit einer Aufnahme (2125) zusammenwirkt, die in jedem Schaufelabdeckelement vorgesehen ist, um jedes Verriegelungselement in Position zu halten.

8. Rotor gemäß einem der Ansprüche 1 bis 7, **dadurch gekennzeichnet, dass** jede Schaufel ferner ganz oder teilweise eine Schaufelplattform (150) mit oder ohne Spoiler und mit oder ohne Kippschutzwand umfasst.

9. Rotor gemäß einem der Ansprüche 1 bis 8, **dadurch gekennzeichnet, dass** die Faserverstärkung jeder Schaufel durch mehrschichtiges Binden von Fäden erhalten wird.

10. Rotor gemäß einem der Ansprüche 1 bis 9, **dadurch gekennzeichnet, dass** jede Schaufel und jedes Schaufelabdeckelement aus einem Verbundwerkstoff mit keramischer Matrix (CMC) hergestellt ist.

11. Rotor gemäß einem der Ansprüche 1 bis 9, **dadurch gekennzeichnet, dass** jede Schaufel und jedes Schaufelabdeckelement aus einem Verbundwerkstoff mit organischer Matrix (CMO) hergestellt ist.

12. Verdichter, ausgestattet der mit einem Rotor gemäß einem der Ansprüche 1 bis 11.

13. Turbomaschine mit einem Verdichter gemäß Anspruch 12.

14. Verfahren zur Herstellung eines Rotors (10) einer Turbomaschine, umfassend die Herstellung von mindestens einer Schaufel (100), für jede Schaufel umfassend:
- Herstellen eines faserstoffhaltigen Schaufelrohlings (300) in einem Stück,
- Formen des Faserrohlings, um eine einteilige faserstoffhaltige Vorform der Schaufel (600) zu erhalten, die einen ersten Abschnitt aufweist, der eine Blattvorform (620) und einen Schaufelfuß (630) bildet,
- Verdichten der Schaufelvorform (600) durch eine Matrix, um eine Schaufel (100) aus Verbundwerkstoff zu erhalten, die eine faserige Verstärkung aufweist, die durch die Vorform gebildet und durch die Matrix verdichtet wird, und die einen Blattkörper (120) umfasst, der sich zwischen einem inneren Ende (101) mit einem Schaufelfuß (110) und einem äußeren Ende (102) erstreckt, das eine Schaufelspitze (140) bildet,
**dadurch gekennzeichnet, dass** das Verfahren ferner umfasst:
- Herstellen von mindestens einer Aussparung oder Kerbe (127) am äußeren Ende (102) jeder Schaufel (100),
- Herstellen von mindestens einem Faserrohling (400) in einem einzigen Stück eines Schaufelabdeckelements,
- Formen des faserigen Faserrohlings, um eine faserstoffhaltige Vorform (500) des Schaufelabdeckelements zu erhalten,
- Verdichten der Vorform des Schaufelabdeckelements durch eine Matrix, um ein Schaufelabdeckelement (200) aus einem Verbundwerkstoff mit einer Faserverstärkung zu erhalten, das aus der Vorform gebildet und durch die Matrix verdichtet ist,
- Herstellen von mindestens einer Öffnung (201) in dem Schaufelabdeckelement,
- Montieren jeder Schaufel an einer Nabe (11) durch Einrasten des Fußes (110) jeder Schaufel (100) in eine entsprechend geformte Aufnahme (12), die am Umfang der Nabe angeordnet ist,
- Montieren jedes Schaufelabdeckelements (200) an mindestens einer Schaufel (100) durch Einrasten des äußeren Endes (102) der Schaufel in die Öffnung oder Kerbe (201) des Schaufelabdeckelements (200),
- Anordnen eines Verriegelungselementes (230) in mindestens der Aussparung (127) des äußeren Endes (102) jeder Schaufel (100).

15. Verfahren gemäß Anspruch 14, **dadurch gekennzeichnet, dass** das äußere Ende (102) jeder Schaufel (100) so bearbeitet wird, dass ein Absatz (125) begrenzt wird, der eine Auflagefläche für das Schaufelabdeckelement (200) bildet.

16. Verfahren gemäß Anspruch 14 oder 15, **dadurch gekennzeichnet, dass** jedes Schaufelabdeckelement (200) eine Spoilerplatte der Schaufelabdeckung (210) und eine Zungenplatte der Schaufelabdeckung (220) umfasst.

17. Verfahren gemäß Anspruch 16, **dadurch gekennzeichnet, dass** der Faserrohling jedes Schaufelabdeckelementes (400) durch mehrschichtiges Binden zwischen mehreren Fadenlagen hergestellt wird und dass er partielle Lockerungsbereiche (401, 402) zwischen zwei Reihen benachbarter Fadenlagen aufweist, wobei eine der beiden Reihen von Lagen gefaltet wird, wenn der Rohling so geformt wird, dass er Zungen bildet.

## Claims

1. A turbine engine rotor (10) comprising at least one blade (100) of composite material comprising fiber reinforcement densified by a matrix, each blade (100) comprising a blade body (120) extending between an inner end (101) having a blade root (110) and an outer end (102) forming the tip (140) of the blade (100), the rotor being **characterized in that** it includes at least one outer platform element (200) of composite material comprising fiber reinforcement densified by a matrix, the outer platform element including at least one opening (201) in which the outer end (102) of a blade (100) is engaged, the portion (126a) of the outer end (102) of each blade (100) that extends beyond the outer platform element (200) including at least one slot or notch (127) for receiving a locking element (230).

2. A rotor according to claim 1, **characterized in that** the outer end (102) of each blade (100) presents dimensions that are smaller than the dimensions of the underlying portion of the blade body (120) so as to define a shoulder (125) forming a bearing surface for the outer platform element (200).

3. A rotor according to claim 1 or claim 2, **characterized in that** each outer platform element (200) has an outer platform overhang plate (210) and an outer platform wiper plate (220).

4. A rotor according to claim 3, **characterized in that** each outer platform element (200) presents, at each of its longitudinal ends, an offset (211; 213) so as to enable two adjacent outer platform elements to overlap in part.

5. A rotor according to any one of claims 1 to 4, **characterized in that** each outer platform element has a plurality of openings (1201-1204; 2201, 2202) so as to engage each outer platform element (1200; 2200) with the outer ends (1102; 2102) of a plurality of adjacent blades (1100; 2100).

6. A rotor according to any one of claims 1 to 5, **characterized in that** the outer end (2102) of each blade (2100) extending beyond the outer platform element (2200) includes two slots or notches (2127, 2128), and **in that** each locking element (2230) has two arms (2231, 2232) respectively engaged in said slots or notches.

7. A rotor according to any one of claims 1 to 6, **characterized in that** each locking element (2230) includes, at one end, a rim (2233) that co-operates with a housing (2125) formed in each outer platform element so as to hold each locking element in position.

8. A rotor according to any one of claims 1 to 7, **characterized in that** each blade also includes all or part of an inner platform (150) with or without overhangs and with or without an anti-tilting rim.

9. A rotor according to any one of claims 1 to 8, **characterized in that** the fiber reinforcement of each blade is obtained by multilayer weaving of yarns.

10. A rotor according to any one of claims 1 to 9, **characterized in that** each blade and each outer platform element is made of ceramic matrix composite (CMC) material.

11. A rotor according to any one of claims 1 to 9, **characterized in that** each blade and each outer platform element is made of organic matrix composite (OMC) material.

12. A compressor fitted with a rotor according to any one of claims 1 to 11.

13. A turbine engine fitted with a compressor according to claim 12.

14. A method of fabricating a turbine engine rotor (10), the method comprising making at least one blade (100), the method comprising for each blade:
• making a blade fiber blank (300) as a single piece;
• shaping the fiber blank so as to obtain a single-piece blade fiber preform (600) having a first portion forming a preform for a blade airfoil (620) and a blade root (630);
• densifying the blade preform (600) with a matrix in order to obtain a composite material blade (100) having fiber reinforcement constituted by the preform and densified by the matrix, and comprising a blade body (120) extending between an inner end (101) comprising a blade root (110) and an outer end (102) forming a blade tip (140);
the method being **characterized in that** it further comprises:
• making at least one slot or notch (127) in the outer end (102) of each blade (100);
• making at least one single-piece fiber blank (400) for an outer platform element;
• shaping the fiber blank to obtain an outer platform element fiber preform (500);
• densifying the outer platform element preform with a matrix to obtain an outer platform element (200) of composite material having fiber reinforcement constituted by the preform and densified by the matrix;
• making at least one opening (201) in the outer platform element;
• mounting each blade on a hub (11) by engaging the root (110) of each blade (100) in a housing (12) of complementary shape formed in the periphery of said hub;
• mounting each outer platform element (200) on at least one blade (100) by engaging the outer end (102) of the blade in the opening or notch (201) in the outer platform element (200); and
• arranging a locking element (230) in at least the slot (127) in the outer end (102) of each blade (100).

15. A method according to claim 14, **characterized in that** the outer end (102) of each blade (100) is machined so as to define a shoulder (125) forming a bearing surface for the outer platform element (200).

16. A method according to claim 14 or claim 15, **characterized in that** each outer platform element (200) has an outer platform overhang plate (210) and an outer platform wiper plate (220).

17. A method according to claim 16, **characterized in that** the fiber blank of each outer platform element (400) is made by multilayer weaving between a plurality of yarn layers, and **in that** it includes partial zones (401, 402) of non-interlinking between two series of adjacent yarn layers, one of the two series of layers being folded out
